# EUROPÄISCHE PATENTSCHRIFT

(11) **EP 1 333 195 B1**
(45) Veröffentlichungstag und Bekanntmachung des Hinweises auf die Patenterteilung: **02.01.2004**
(21) Anmeldenummer: 02002122.6
(22) Anmeldetag: 29.01.2002
(51) Int. Cl.: F16H 57/02, F16C 3/02, B23P 15/00

(54) **Verfahren zum Herstellen einer Getriebewelle**
Method for producing a gear box shaft
Procédé pour produire un arbre de boîte de vitesses

(43) Veröffentlichungstag der Anmeldung: 06.08.2003
(73) Patentinhaber: Getrag Ford Transmissions GmbH, 50725 Köln (DE)
(72) Erfinder: Lorenz, Daniel, 50725 Köln-Merkenich (DE); Schechtel, Peter, 50725 Köln-Merkenich (DE)
(74) Vertreter: Steil, Christian, Dipl.-Ing.

(56) Entgegenhaltungen:
- DE-A- 19 633 586
- DE-A- 19 840 738
- US-A- 3 024 626
- US-A- 4 524 503
- US-A- 5 917 726
- US-B1- 6 336 351

## Beschreibung

Die vorliegende Erfindung betrifft ein Verfahren zum Herstellen einer Getriebewelle, die wenigstens einen axialen Keilnutabschnitt mit Keilnutprofil sowie wenigstens eine Radialnut in dem Keilnutabschnitt aufweist.

Getriebewellen der genannten Art werden beispielsweise in Kraftfahrzeug-Getrieben, insbesondere in Stirnradgetrieben für Kraftfahrzeuge eingesetzt.

Die Getriebewellen dienen dazu, Zahnräder unterschiedlichen Durchmessers drehbar oder drehfest zu lagern. Ferner sind gewöhnlich Schiebemuffen verdrehfest aber axial verschieblich an einer derartigen Getriebewelle gelagert. Um ein axiales Verschieben der Schaltmuffe an der Getriebewelle zu ermöglichen, ist die Getriebewelle in der Regel mit einem Keilnutprofil ausgestattet. Es versteht sich jedoch, daß anstelle eines Keilnutprofiles auch ein beliebiges anderes in Axialrichtung durchgehendes Profil zu diesem Zweck verwendet werden kann, das einerseits eine Verdrehsicherung und andererseits eine axiale Verschieblichkeit realisiert.

Ferner sind die Getriebewellen häufig im Durchmesser gestuft ausgebildet, um Zahnräder unterschiedlichen Durchmessers zu lagern. Die Getriebewelle weist folglich in der Regel eine Mehrzahl von Schultern auf.

Zur Festlegung des zulässigen Verschiebebereiches einer Schiebemuffe sind innerhalb des Keilnutprofiles häufig axiale Anschläge ausgebildet. Ein bekanntes Verfahren zur axialen Sicherung besteht darin, in dem Keilnutabschnitt eine Radialnut auszubilden, in die ein Sicherungsring eingesetzt wird.

Ferner werden Getriebewellen in der Regel gehärtet, insbesondere einsatzgehärtet.

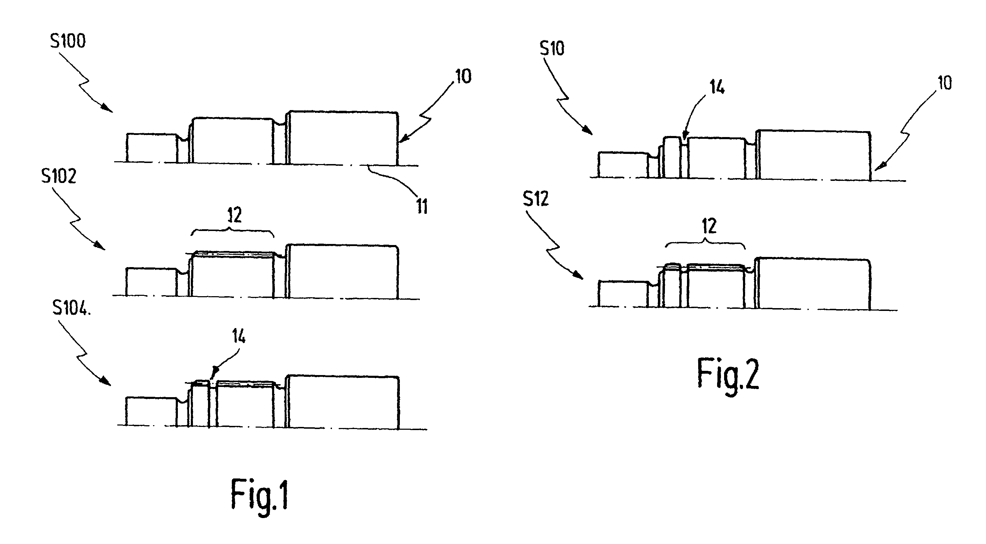

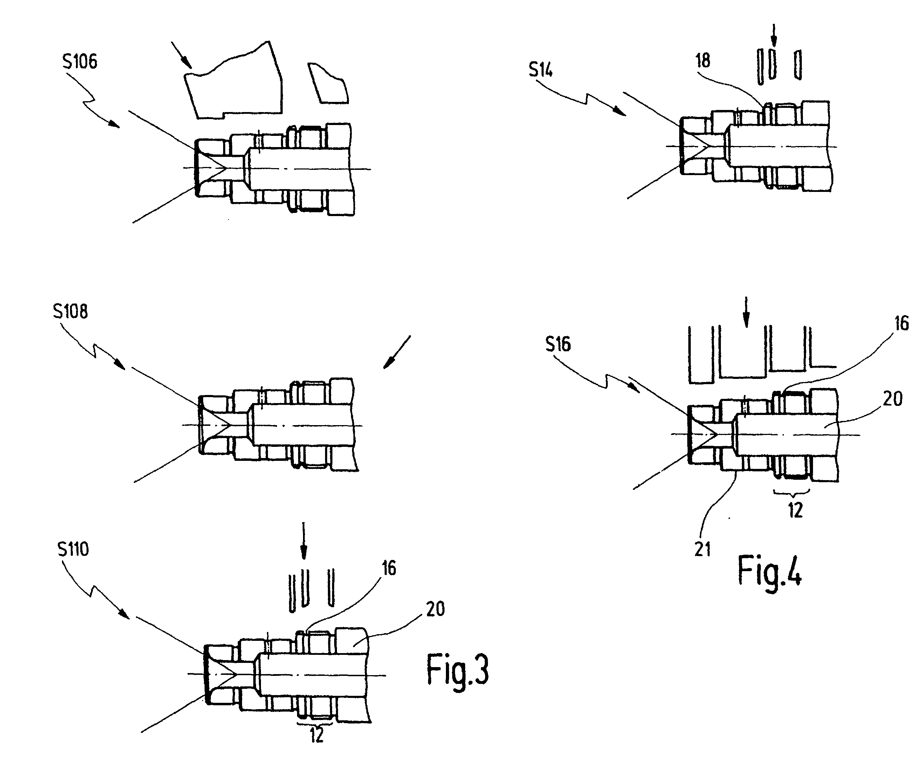

Ein bekanntes Verfahren zum Herstellen einer Getriebewelle ist in den Fig. 1 und 3 dargestellt. Dabei zeigt Fig. 1 die einzelnen Bearbeitungsschritte vor dem Härten und Fig. 3 die Bearbeitungsschritte nach dem Härten.

Zunächst wird in einem Schritt S100 ein ungehärteter Wellenrohling 10 bereitgestellt. Der Wellenrohling 10 weist eine Achse 11 und eine Mehrzahl von Abschnitten unterschiedlichen Durchmessers auf, die durch Schultern voneinander abgesetzt sind. Die Herstellung der Abschnitte unterschiedlichen Durchmessers erfolgt gewöhnlich durch Drehen.

In einem Schritt S102 wird anschließend innerhalb eines axialen Keilnutabschnittes 12 ein Keilnutprofil ausgebildet. Diese erfolgt gewöhnlich durch Walzen oder Fräsen. In einem anschließenden Schritt S104 wird innerhalb des Keilnutabschnittes 12 eine radiale erste Nut 14 ausgebildet, insbesondere durch Drehen.

Anschließend wird der derart bearbeitete Wellenrohling 10 gehärtet, insbesondere einsatzgehärtet.

Anschließend erfolgt die Hartbearbeitung. Dabei werden zunächst in einem Schritt S106 (Fig. 3) die Schultern und radialen Umfangsflächen (Außendurchmesser) durch schräg angreifende Schleifwerkzeuge geschliffen. In dem Arbeitsschritt S106 erfolgt dabei die Bearbeitung der zu einer Seite hin weisenden Schultern, in einem anschließenden Arbeitsschritt S108 die Bearbeitung der in die entgegengesetzte Richtung weisenden Schultern (in Fig. 3 nicht näher dargestellt).

Abschließend erfolgt ein Schleifen der Nuten, einschließlich der radialen ersten Nut 14, um derart die Endform der Radialnut 16 zu bilden.

Das bekannte Verfahren ist in einiger Hinsicht von Nachteil. Zum einen sind zwei Schleifschritte mit einem Winkelkopf (S106, S108) notwendig, sowie ein zusätzlicher Schleifschritt S110 für die Radialnut. Zudem sind die Beschaffung und die Wartung der Schleifmaschinen vergleichsweise teuer. Schließlich wird in großen Mengen Kühlmittel gebraucht.

Vor diesem Hintergrund ist es die Aufgabe der vorliegenden Erfindung, ein Verfahren zum Herstellen einer Getriebewelle anzugeben, das gegenüber dem Stand der Technik verbessert ist.

Diese Aufgabe wird durch ein Verfahren zum Herstellen einer Getriebewelle gelöst, die wenigstens einen axialen Keilnutabschnitt mit Keilnutprofil sowie wenigstens eine Radialnut in dem Keilnutabschnitt aufweist, mit den Schritten:
a) Bereitstellen eines ungehärteten Wellenrohlings;
b) Bearbeiten des ungehärteten Wellenrohlings, um das Keilnutprofil und eine radiale erste Nut zu bilden, derart, daß die radiale erste Nut im wesentlichen frei von axial in die radiale erste Nut vorstehenden Graten ist;
c) Härten des bearbeiteten Wellenrohlings; und
d) Hartdrehen der radialen ersten Nut, um die Radialnut zu bilden.

Durch die Maßnahme, die radiale erste Nut durch Hartdrehen zu bearbeiten, um die Radialnut zu bilden, ist es möglich, den Prozeß insgesamt zu optimieren. Die Werkzeugkosten können reduziert werden, es wird insgesamt weniger Kühlmittel benötigt.

Die Aufgabe wird auf diese Weise vollkommen gelöst.

Gemäß einer besonders bevorzugten Ausführungsform wird im Schritt b) zunächst die radiale erste Nut gedreht und anschließend wird das Keilnutprofil gewalzt, wobei während des Walzvorganges ein Füllwerkzeug in die radiale erste Nut eingeführt ist, das ein Verdrängen von Material in axialer Richtung in die radiale erste Nut hinein verhindert bzw. verringert.

Durch einen derartigen Walzvorgang mit "vorgehaltener" Nut mittels eines derartigen Füllwerkzeuges, nach der Art eines Schwertes, ist es möglich, die radiale erste Nut bereits zu Beginn der Bearbeitung des Wellenrohlings auszubilden, dann also, wenn die gestufte Längskontur der Getriebewelle durch Drehen hergestellt wird. Folglich ist es möglich, den Wellenrohling vor dem Härten mit einer möglichst geringen Anzahl von Werkzeugwechseln zu bearbeiten.

Im Stand der Technik ist nach dem Herstellen des Keilnutprofils nochmals ein Umspannen des Wellenrohlings erforderlich, um anschließend die radiale erste Nut zu bilden (Schritte S102 und S104).

Ferner ist es von besonderem Vorteil, wenn innerhalb des Schrittes d) zwei axial gegenüberliegende Flanken der radialen ersten Nut in einem Einstechschritt mit rein radialer Werkzeugbewegung hartgedreht werden.

Auf diese Weise läßt sich die Bearbeitungszeit insgesamt drastisch reduzieren.

Gemäß einer weiteren bevorzugten Ausführungsform weist die Radialnut wenigstens einen schrägen Flankenabschnitt auf, der unter einem Winkel größer Null zur Wellenachse ausgerichtet ist.

Durch einen derartigen schrägen Flankenabschnitt, der üblicherweise zwischen zwei axial gegenüberliegenden Flanken ausgebildet ist, ist es möglich, einen eingesetzten Sicherungsring in eine definierte Axialposition zu zwingen.

Dabei ist es von besonderem Vorteil, wenn die erste radiale Nut im Schritt b) als gerade Nut mit zwei Flanken gebildet ist, die im wesentlichen senkrecht zur Wellenachse ausgerichtet sind.

Auf diese Weise läßt sich die erste radiale Nut einfacher herstellen.

Insgesamt ist es dann von Vorteil, wenn der schräge Flankenabschnitt innerhalb des Schrittes d) vor dem Einstechschritt durch einen Hartdrehschritt mit axialem Werkzeugversatz vorbearbeitet wird.

Mit anderen Worten wird der schräge Flankenabschnitt durch ein herkömmliches Drehwerkzeug bei axialem Werkzeugversatz vorbearbeitet. Dabei kann die Axialversatzgeschwindigkeit relativ hoch gewählt werden, da der schräge Flankenabschnitt anschließend noch durch den Einstechschritt feinbearbeitet wird.

Gemäß einer weiteren bevorzugten Ausführungsform weist der Wellenrohling vor dem Härten wenigstens eine Schulter auf und die Stirnfläche der Schulter wird nach dem Härten hartgedreht.

Mit anderen Worten werden bei dieser Ausführungsform sämtliche Stirnflächen, seien es Stirnflächen von Schultern oder Flanken von Nuten, durch Hartdrehen bearbeitet, so daß eine aufwendige, zweistufige Schleifbearbeitung nicht notwendig ist.

Statt dessen ist es bevorzugt, wenn wenigstens eine radiale Umfangsfläche nach dem Härten einstech-geschliffen wird.

Mit anderen Worten ist es erfindungsgemäß bei dieser Ausführungsform nicht notwendig, Schleifwerzeuge in Schrägausrichtung zu der Wellenachse zu führen. Statt dessen können die Außenradien durch eine rein radiale Werkzeugbewegung großflächig geschliffen werden.

Insgesamt ist es folglich von Vorteil, wenn nach dem Härten bis zur Fertigstellung der Getriebewelle keine Schleifbearbeitung an Stirnflächen erfolgt.

Denn dann ist es nicht notwendig, Schleifwerkzeuge in schräger Ausrichtung zur Wellenachse zu führen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: drei Verfahrensschritte zur Bearbeitung eines Wellenrohlings vor dem Härten gemäß dem Stand der Technik;
- Fig. 2: zwei Verfahrensschritte zur Bearbeitung eines Wellenrohlings vor dem Härten gemäß der vorliegenden Erfindung;
- Fig. 3: drei Bearbeitungsschritte nach dem Härten zur Herstellung einer Getriebewelle gemäß dem Stand der Technik;
- Fig. 4: zwei Bearbeitungsschritte nach dem Härten zur Herstellung einer Getriebewelle gemäß der vorliegenden Erfindung; und
- Fig. 5: zwei Verfahrensschritte, in denen eine Radialnut hartgedreht wird.

In den Fig. 2 und 4 ist eine besonders bevorzugte Ausführungsform des erfindungsgemäßen Verfahrens zur Herstellung einer Getriebewelle 20 in schematischer Weise dargestellt.

In einem ersten Verfahrensschritt S10 werden die Konturen eines ungehärteten Wellenrohlings 10 durch Drehen gebildet. Als Teil dieses Verfahrensschrittes S10 wird auch eine radiale erste Nut 14 gedreht, die innerhalb eines noch zu bildenden Keilnutabschnittes 12 angeordnet ist.

Innerhalb des Keilnutabschnittes 12 wird in einem darauffolgenden Verfahrensschritt S12 ein Keilnutprof il durch Walzen hergestellt.

Ein nicht näher dargestelltes, speziell angepaßtes Walzwerkzeug ist dabei mit einem Füllwerkzeug nach der Art eines Schwertes ausgestattet, das während des Walzvorganges durchgehend in die radiale erste Nut 14 eingeführt ist. Folglich wird verhindert, daß während des Walzvorganges Material in axialer Richtung in die radiale erste Nut hinein verdrängt wird.

Durch diese Art von Walzbearbeitung mit vorgehaltenem Füllwerkzeug (Schwert) verbleiben die Dimensionen der radialen ersten Nut nahezu unverändert. Es wird ferner auch vermieden, daß sonstige Partikel (Späne oder ähnliches) in die radiale erste Nut 14 gelangen.

Es versteht sich, daß die Darstellung in Fig. 2 rein schematischer Natur ist. Es ist lediglich ein axialer Abschnitt eines üblichen Wellenrohlings 10 dargestellt, um die Prinzipien der vorliegenden Erfindung deutlicher herauszustellen.

Nach der beschriebenen Herstellung des Keilnutprofils in dem Keilnutabschnitt 12 wird der so bearbeitete Wellenrohling 10 gehärtet, insbesondere einsatzgehärtet, und zwar bis auf eine Tiefe von üblicherweise 0,5 mm. Die Herstellungsvorschriften für die fertige Getriebewelle 20 fordern dann üblicherweise noch eine Einsatztiefe von wenigsten 0,3 mm nach der Hartbearbeitung.

Man kann davon ausgehen, daß die Breite der Keilnut-Zähne etwa so gewählt ist, daß nach dem Härten die Keilnut-Zähne insgesamt durchgehärtet sind.

Nach dem Härten erfolgt in einem Schritt S14 (Fig. 4) das Hartdrehen sämtlicher Nuten (z.B. 14) und Stirnflächen (beispielsweise im Bereich von Schultern 18).

In einem letzten Verfahrensschritt S16 werden dann lediglich noch die Radialumfangsflächen 21 (also die Außendurchmesser) durch Einstech-Schleifen mit rein radialer Werkzeugbewegung außen rundgeschliffen.

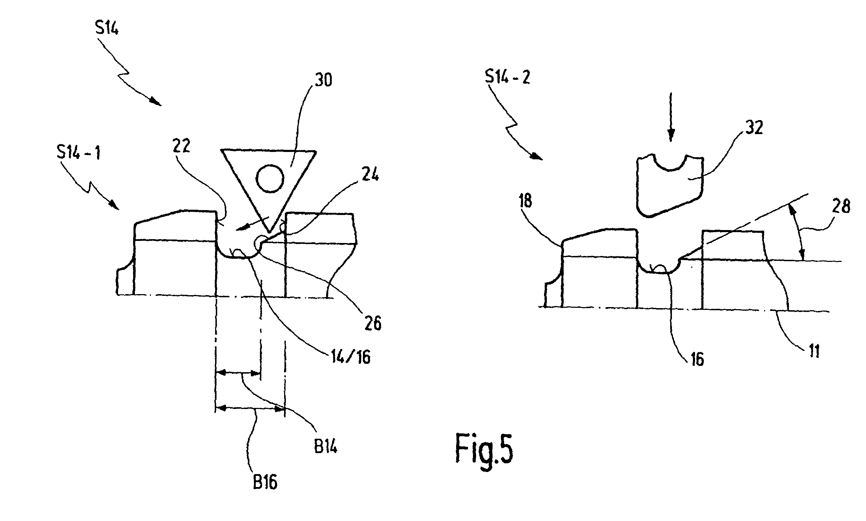

Die Bearbeitung der ersten radialen Nut 14 zur Herstellung der Radialnut 16 im Schritt S14 erfolgt wie nachstehend unter Bezugnahme auf Fig. 5 beschrieben.

In Fig. 5 ist der Schritt S14 als Folge von zwei einzelnen Bearbeitungsschritten S14-1 und S14-2 dargestellt.

In dem ersten Teilverfahrensschritt S14-1 erfolgt eine Vorbearbeitung mittels eines herkömmlichen Drehwerkzeuges 30, das dabei auch in Axialrichtung versetzt wird, wie es durch einen Pfeil angedeutet ist.

In dieser Darstellung ist ferner die Breite B14 der radialen ersten Nut 14 gezeigt, die deutlich geringer ist als die Breite B16 der fertiggestellten Radialnut 16.

Die zusätzliche Breite ergibt sich daher, daß auf einer Seite neben der radialen ersten Nut 14 Material im Bereich der durchgehärteten - Zähne des Keilnutprofils weggenommen wird. Auf der anderen Seite wird in dem Schritt S14-1 die gegenüberliegende Flanke 22 der radialen ersten Nut 14 nicht bearbeitet. Auch der Grund der radialen ersten Nut 14 wird in diesem Verfahrensschritt nicht bearbeitet.

Die gegenüberliegende ursprünglich rein radial ausgerichtete Flanke der radialen ersten Nut 14 wird jedoch unter Verbreiterung der Nut so bearbeitet, daß eine der Flanke 22 gegenüberliegende Flanke 24 mit radialer Ausrichtung und ein zum Grund der radialen ersten Nut 14 hin ausgerichteter schräger Flankenabschnitt 26 gebildet werden.

Der schräge Flankenabschnitt 26 ist folglich über einen axialen Abschnitt der Getriebewelle 20 gebildet, der der Differenz B16 minus B14 entspricht.

Während die radiale erste Nut 14 tiefer geht als das Keilnutprofil, ist der schräge Flankenabschnitt 26 ausschließlich oder im wesentlichen ausschließlich im Bereich der Zähne des Keilnutprofils gebildet, also dort, wo die Getriebewelle durchgehärtet ist.

Der schräge Flankenbereich 26 entspricht ferner dem Bereich, in dem eine Innenkante eines später einzulegenden Sprengringes aufliegt. Die Schräge dient dazu, den Sprengring generell gegen die gegenüberliegende Flanke 22 zu drücken, um so eine definierte axiale Position des Sprengringes zu realisieren.

Der Winkel 28 des schrägen Flankenabschnittes 26 in Bezug auf die Wellenachse 11 liegt im Bereich zwischen 20 und 40 Grad, vorzugsweise bei etwa 30 Grad.

Die Bearbeitung mittels des herkömmlichen Drehwerkzeuges 30 kann relativ schnell erfolgen, trotz des axialen Versatzes. Denn dem Teilschritt S14-1 folgt ein Endbearbeitungsschritt S14-2, wie er ebenfalls in Fig. 5 schematisch dargestellt ist.

In dem Teilschritt S14-2 werden die zwei gegenüberliegenden Flanken 22, 24 sowie der schräge Flankenabschnitt 26 in einem Einstechschritt mit rein radialer Bewegung einer Spezialplatte 32 hartgedreht.

Die Spezialplatte 32 ist so ausgebildet, daß ihre zwei in axialer Richtung entgegengesetzten Kanten dazu ausgelegt sind, die Flanken 22, 24 jeweils um etwa 0,2 mmm abzudrehen, so daß bei einer ursprünglichen Einsatztiefe von etwa 0,5 mm eine Resttiefe von 0,3 mm verbleibt.

Eine Vorderkante der Spezialplatte 32 ist schräg ausgebildet und dazu ausgelegt, den schrägen Flankenabschnitt 26 flächig abzudrehen.

Demzufolge wird durch einen Einstechschritt S14-2 die gesamte Radialnut 16 fertiggestellt.

Alle anderen Nuten, auch außerhalb von Keilnutprofilen, können auf ähnliche Weise hergestellt werden. Alle Flanken bzw. Stirnflächen im Bereich von Schultern 18 können ebenfalls durch Drehwerkzeuge hartgedreht werden.

Folglich ist es nicht notwendig, an der gehärteten Getriebewelle eine Schleifbearbeitung mit axialer Komponente durchzuführen.

Vielmehr ist es lediglich noch im Schritt S16 notwendig, die Außendurchmesser durch radiales Einstech-Schleifen rundzubearbeiten.

Insgesamt läßt sich die Getriebewelle 20 folglich mit weniger Werkzeugmaschinen und in weniger Verfahrensschritten durchführen. Auch die Zykluszeit läßt sich reduzieren. Ferner ergibt sich eine hohe Flexibilität des Herstellungsprozesses bei geringen Werkzeugwechselzeiten für unterschiedliche Getriebewellentypen.

## Patentansprüche

1. Verfahren zum Herstellen einer Getriebewelle (20), die wenigstens einen axialen Keilnutabschnitt (12) mit Keilnutprofil sowie wenigstens eine Radialnut (16) im dem Keilnutabschnitt (12) aufweist, mit den Schritten:
a) Bereitstellen eines ungehärteten Wellenrohlings (10);
b) Bearbeiten (S10, S12) des ungehärteten Wellenrohlings (10), um das Keilnutprofil und eine radiale erste Nut (14) zu bilden, derart, daß die radiale erste Nut (14) im wesentlichen frei von axial in die radiale erste Nut (14) vorstehenden Graten ist;
c) Härten des bearbeiteten Wellenrohlings (10);
d) Hartdrehen (S14) der radialen ersten Nut (14), um die Radialnut (16) zu bilden.

2. Verfahren nach Anspruch 1, wobei im Schritt b) zunächst die radiale erste Nut (14) gedreht wird (S10) und anschließend das Keilnutprofil gewalzt wird (S12), wobei während des Walzvorganges (S12) ein Füllwerkzeug in die radiale erste Nut (14) eingeführt ist, das ein Verdrängen von Material in axialer Richtung in die radiale erste Nut (14) hinein verhindert bzw. verringert.

3. Verfahren nach Anspruch 1 oder 2, wobei innerhalb des Schrittes d) zwei axial gegenüberliegende Flanken (22, 24) der radialen ersten Nut (14) in einem Einstechschritt (S14) mit rein radialer Werkzeugbewegung hartgedreht werden.

4. Verfahren nach einem der Ansprüche 1 - 3, wobei die Radialnut (16) wenigstens einen schrägen Flankenabschnitt (26) aufweist, der unter einem Winkel (28) größer Null zur Wellenachse (11) ausgerichtet ist.

5. Verfahren nach Anspruch 4, wobei erste radiale Nut (14) im Schritt b) als gerade Nut mit zwei Flanken (22, 24) gebildet wird, die im wesentlichen senkrecht zur Wellenachse (11) ausgerichtet sind.

6. Verfahren nach Anspruch 3 und 5, wobei der schräge Flankenabschnitt (26) innerhalb des Schrittes d) vor dem Einstechschritt (S14-2) durch einen Hartdrehschritt (S14-1) mit axialem Werkzeugversatz vorbearbeitet wird.

7. Verfahren nach einem der Ansprüche 1 - 6, wobei der Wellenrohling (10) vor dem Härten wenigstens eine Schulter (18) aufweist und die Stirnfläche der Schulter (18) nach dem Härten hartgedreht wird.

8. Verfahren nach einem der Ansprüche 1 - 7, wobei wenigstens eine radiale Umfangsfläche (21) nach dem Härten einstech-geschliffen wird (S16).

9. Verfahren nach einem der Ansprüche 1 - 8, wobei nach dem Härten bis zur Fertigstellung der Getriebewelle (20) keine Schleifbearbeitung an Stirnflächen erfolgt.

## Claims

1. Method for producing a gear shaft (20), comprising at least one axial keyway portion (12) with a keyway profile and at least one radial groove (16) in the keyway portion (12), including the steps:
a) preparing an unhardened shaft blank (10);
b) machining (S10, S12) the unhardened shaft blank (10) to form the keyway profile and a radial first groove (14), in such a way that the radial first groove (14) is substantially free of burrs projecting axially into the radial first groove (14);
c) hardening the machined shaft blank (10);
d) hard turning (S14) the radial first groove (14) to form the radial groove (16).

2. Method according to claim 1, wherein in step b) initially the radial first groove (14) is turned (S10) and then the keyway profile is milled (S12), wherein during the milling process (S12) a filling tool is inserted into the radial first groove (14) which prevents or reduces a displacement of material in axial direction into the radial first groove (14).

3. Method according to claim 1 or 2, wherein within step d) two axially opposing flanks (22, 24) of the radial first groove (14) are hard turned in a plunge-cut step (S14) with a purely radial tool movement.

4. Method according to any one of claims 1 to 3, wherein the radial groove (16) comprises at least one oblique flank portion (26) which is oriented at an angle (28) greater than zero to the shaft axis (11 ).

5. Method according to claim 4, wherein in step b) the first radial groove (14) is formed as a straight groove with two flanks (22, 24) which are oriented substantially perpendicular to the shaft axis (11).

6. Method according to claim 3 and 5, wherein the oblique flank portion (26) is pre-machined with an axial tool offset by a hard turning step (S14-1) within step d) prior to the plunge-cut step (S14-2).

7. Method according to any one of claims 1 to 6, wherein the shaft blank (10) comprises at least one shoulder (18) prior to hardening and the end face of the shoulder (18) is hard turned after hardening.

8. Method according to any one of claims 1 to 7, wherein at least one radial peripheral face (21) is plunge-cut ground (S16) after hardening.

9. Method according to any one of claims 1 to 8, wherein after hardening there is ho grinding at the end faces until completion of the gear shaft (20).

## Revendications

1. Procédé pour fabriquer un arbre de boîte de transmission (20), qui comporte au moins un segment axial de rainure de clavette (12) avec un profil de rainure de clavette ainsi qu'au moins une rainure radiale (16) dans le segment de rainure de clavette (12), avec les étapes suivantes :
a) fourniture d'une ébauche d'arbre non trempée (10) ;
b) usinage (S10, S12) de l'ébauche d'arbre (10) non trempée afin de former le profil de rainure de clavette et une première rainure radiale (14) de manière à ce que la première rainure radiale (14) soit sensiblement exempte de bavures débordant dans le sens axial dans la première rainure radiale (14) ;
c) trempe de l'ébauche d'arbre usinée (10) ;
d) tournage dur (S14) de la première rainure radiale (14) afin de former la rainure radiale (16).

2. Procédé selon la revendication 1, dans lequel, au cours de l'étape b), la première rainure radiale (14) est d'abord tournée (S10), puis le profil de rainure de clavette est laminé (S12), dans lequel, au cours de l'opération de laminage (S12), un outil de remplissage, qui empêche ou qui réduit un déplacement de matière dans le sens axial dans la première rainure radiale (14), est introduit dans la première rainure radiale (14).

3. Procédé selon la revendication 1 ou 2, dans lequel, au cours de l'étape d), deux flancs opposés dans le sens axial (22, 24) de la première rainure radiale (14) sont soumis à un tournage dur au cours d'une étape de plongée (S14) avec un mouvement d'outil purement radial.

4. Procédé selon l'une des revendications 1 à 3, dans lequel la rainure radiale (16) comporte au moins un segment de flanc incliné (26) qui est orienté par rapport à l'arbre (11) selon un angle (28) supérieur à zéro.

5. Procédé selon la revendication 4, dans lequel, au cours de l'étape b), la première rainure radiale (14) est formée comme une rainure droite avec deux flancs (22, 24) qui sont orientés sensiblement perpendiculairement par rapport à l'axe de l'arbre (11 ).

6. Procédé selon les revendications 3 et 5, dans lequel le segment de flanc incliné (26), au cours de l'étape d), est pré-usiné avant l'étape de plongée (S14-2) par une étape de tournage dur (S14-1) avec un déport d'outil axial.

7. Procédé selon l'une des revendications 1 à 6, dans lequel l'ébauche d'arbre (10) comporte au moins un épaulement (18) avant la trempe, et la face frontale de l'épaulement (18) est soumise à un tournage dur après la trempe.

8. Procédé selon l'une des revendications 1 à 7, dans lequel au moins une surface périphérique radiale (21) est rectifiée en plongée (S16) après la trempe.

9. Procédé selon l'une des revendications 1 à 8, dans lequel, après la trempe et jusqu'au finissage de l'arbre de boîte de transmission (20), aucun usinage de rectification n'est effectué sur les faces frontales.
